(19) **Europäisches Patentamt**
**European Patent Office**
**Office européen des brevets**

(11) **EP 4 485 793 B1**

## (12) EUROPEAN PATENT SPECIFICATION

(45) Date of publication and mention
of the grant of the patent:
**05.08.2026 Bulletin 2026/32**

(51) International Patent Classification (IPC):
***H02P 23/14*** *(2006.01)* ***H02P 29/00*** *(2016.01)*

(21) Application number: **23181621.6**

(52) Cooperative Patent Classification (CPC):
**H02P 29/00; H02P 23/14**

(22) Date of filing: **27.06.2023**

(54) **METHOD OF IDENTIFYING PARAMETERS OF A RESONANT DYNAMICAL SYSTEM**

VERFAHREN ZUR IDENTIFIZIERUNG VON PARAMETERN EINES RESONANTEN DYNAMISCHEN SYSTEMS

PROCÉDÉ D'IDENTIFICATION DE PARAMÈTRES D'UN SYSTÈME DYNAMIQUE RÉSONANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**01.01.2025 Bulletin 2025/01**

(73) Proprietor: **ABB SCHWEIZ AG
5400 Baden (CH)**

(72) Inventors:
• **HARNEFORS, Lennart
Västerås (SE)**
• **IKRAM UL HAQ, Omer
Surahammar (SE)**
• **BOSGA, Sjoerd
Västerås (SE)**
• **SAARINEN, Kari
Lohja (FI)**

(74) Representative: **Kransell & Wennborg KB
P.O. Box 27834
115 93 Stockholm (SE)**

(56) References cited:
**EP-A1- 2 510 891      CA-A1- 2 253 586
JP-A- 2000 028 624**

## Description

## TECHNICAL FIELD

The present disclosure generally relates to parameter identification of a resonant dynamical system describing a physical system such as an electrical machine assembly.

## BACKGROUND

A physical system that can be described by a resonant dynamical system is a system that can be set to self-oscillate when stimulated with a frequency close to or at the resonance, or natural, frequency of the system.

For electrical motors, for example, severe vibrations of the foundation of the electric motor occur when the electrical motor operates at natural frequencies of the mechanical body, i.e., of the entire motor assembly, including the stator, the rotor, motor end plates, and connected load if any, etc.

Identification of parameters of the resonant dynamical system helps understanding at what frequency or frequencies severe vibrations may occur, which in turn may facilitate avoiding these vibrations.

## SUMMARY

Thus, in view of the above an object of the present disclosure is to provide a method which solves or at least mitigates the problems of the prior art.

There is hence according to a first aspect of the present disclosure provided a method of identifying one or more parameters of a resonant dynamical system describing a physical system, the method comprising: a) simultaneously stimulating the physical system by means of a first frequency below an expected resonance frequency of the resonant dynamical system and a second frequency above the expected resonance frequency, b) increasing the first frequency and decreasing the second frequency, wherein EP2510891 A1 discloses a battery-powered device that produces high frequency mechanical motion at the end of a waveguide for performing useful work, specifically, to cut and seal tissue during surgery. A piezoelectric transducer is used to convert electrical energy into the mechanical energy that produces the motion at the end of the waveguide. Particularly, when the transducer and waveguide are driven at their composite resonant frequency, a large amount of mechanical motion is produced. The circuit components include, among others, a battery power supply, a control circuit, a drive circuit, and a matching circuit, all located within a handpiece of the ultrasonic cutting device and all operating and generating waveforms from battery voltages. The components are selected to convert electrical energy from the battery power supply into a high voltage AC waveform that drives the transducer. Ideally, the frequency of this waveform is substantially the same as the resonant frequency of the waveguide and transducer. The magnitude of the waveform is selected to be a value that produces the desired amount of mechanical motion.

one of the first frequency and the second frequency is set before the other one of the first frequency and the second frequency and is based on a difference between 1 and a gain ratio of a first gain of the resonant dynamical system at the first frequency, and a second gain of the resonant dynamical system at the second frequency, and performing steps a)-b) until a difference between the second frequency and the first frequency is equal to a threshold value, c) freezing the one of the first frequency and the second frequency that in step b) is set after the other frequency when the difference has reached the threshold value, to obtain a first frozen frequency value, d) adjusting the one of the first frequency and the second frequency which is not frozen in step c) to move closer to the first frozen frequency value, and repeating step d) until the gain ratio is within a predetermined acceptable range, or until a predetermined amount of time from the start of the first iteration of step a) has passed, and setting the adjusted first frequency or second frequency in the last iteration in step d) to a second frozen frequency value, and e) estimating a resonance frequency of the resonant dynamical system based on the first frozen frequency value and the second frozen frequency value.

A quick and accurate method may thus be provided for finding an estimate of the resonance frequency of the resonant dynamical system, and thus for the underlying physical system.

The resonance frequency may be used for tuning a control system configured to control the physical system and/or for condition monitoring of the physical system.

The first frequency may be a first angular frequency. The second frequency may be a second angular frequency.

According to one embodiment step e) involves taking the square root of the product of the first frozen frequency value and the second frozen frequency value to obtain the estimated resonance frequency. Thus, the first frozen frequency value and the second frozen frequency value form the geometric average of the resonance frequency. This follows from the method striving to set to gain ratio to 1. The resonance frequency is thus estimated based on the first frozen frequency value and the second frozen frequency value, invariant of the damping and the time delay of the resonant dynamical system.

One embodiment comprises f) stimulating the physical system by means of the resonance frequency, and g) determining a gain of the resonant dynamical system at the estimated resonance frequency.

One embodiment comprises h) determining a time delay of the resonant dynamical system based on an argument of the resonant dynamical system at the estimated resonance frequency.

One embodiment comprises i) determining a damping of the resonant dynamical system based on the gain ratio, the first frozen frequency value, and the second frozen frequency value, wherein the gain ratio when determining the damping $\left(\widehat{\zeta}\right)$ is determined by the first gain ($G_l$) at the estimated resonance frequency $\left(\widehat{\omega_0}\right)$, and the second gain ($G_u$) at the second frozen frequency value.

According to one embodiment the predetermined acceptable range has a lower boundary of at least 0.99 and an upper boundary of at most 1.01.

According to one embodiment the threshold value is at least one order smaller than the resonance frequency.

One embodiment comprises determining the first gain and the second gain based on vibration-related measurements of the physical system when stimulated by the first frequency and the second frequency.

According to one embodiment the physical system is an electrical machine.

The electrical machine may be motor or a generator.

According to one embodiment the stimulating involves injecting oscillating incremental torque into the electrical machine.

According to one embodiment prior to step a) the method comprises simultaneously stimulating the physical system by means of the first frequency and the second frequency below the expected resonance frequency, and adjusting the second frequency until the second frequency is above the expected resonance frequency.

There is according to a second aspect of the present disclosure provided a control system for identifying parameters of a resonant dynamical system describing a physical system, the control system comprising: processing circuitry, and a storage medium comprising computer code which when executed by the processing circuitry is configured to cause the control system to perform the method of the first aspect.

There is according to a third aspect provided a system comprising: a physical system, a control system of the second aspect, and an actuator configured to stimulate the physical system, wherein the control system is configured to control the actuator.

According to one embodiment the physical system is an electrical machine, and the actuator is a power converter. The power converter may be a frequency converter.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

## BRIEF DESCRIPTION OF THE DRAWINGS

Exemplifying embodiments will now be described, with reference to the accompanying drawings, in which:

Fig. 1 schematically shows a motor assembly;

Fig. 2 schematically shows an example of a control system of the motor assembly in Fig. 1;

Fig. 3 is a flowchart of a method of reducing vibrations in the motor assembly; and

Fig. 4 shows functional blocks of the control system; and

Fig. 5 shows an example of the component extractor of the functional blocks.

## DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The method disclosed herein may be used in physical systems that are electrical, mechanical, or electromechanical and which can be modelled by a resonant dynamical system. Such physical systems can be stimulated by an actuator, such as an electrical actuator, e.g., a frequency converter, or a mechanical actuator, to set the physical system in resonance.

In the following, the method will be exemplified in the context of an electrical machine, in particular a motor system. The electrical machine could alternatively be a generator system.

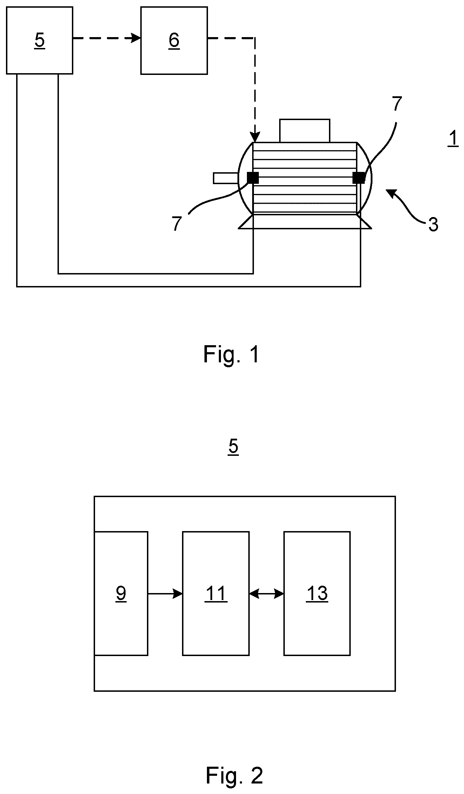

Fig. 1 shows an example of a motor system 1. The motor system 1 comprises a motor assembly including an electric motor 3, the foundation on which the electric motor 3 stands, and the outer cover of the electric motor 3. The electric motor 3 comprises a stator, and a rotor arranged inside the stator and arranged to rotate relative to the stator.

The motor system 1 also comprises a control system 5, a power converter 6, such as a drive, configured to drive the electric motor 3, and configured to be controlled by the control system 5, and a plurality of sensors 7.

The motor assembly may also include a load which the electric motor 3 is configured to drive.

The sensors 7 are configured to make measurements of a vibration-related parameter such as acceleration, vibrational velocity, displacement, or sound, of the motor system 1. The sensors 7 may thus for example be accelerometers, displacement sensors, or microphones. The sensors 7 may for example be arranged to measure horizontal vibration, such as horizontal acceleration, i.e., acceleration in the horizontal plane.

Fig. 2 schematically depicts a block diagram of an example of the control system 5. The control system 5 is configured to identify one or more parameters of a resonant dynamical system describing the motor assembly.

The control system 5 comprises an input unit 9 configured to receive a vibration-related signal based on measurements from the sensors 7.

According to one example, the control system 5 may comprise a signal conditioner which converts the measurements to the vibration-related signal. For example, the sensors 7 may be accelerometers, and the signal conditioner may be configured to convert the acceleration to vibrational velocity, which according to an example may be the vibration-related signal.

The control system 5 comprises processing circuitry 11. The processing circuitry 11 may for example use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning parameter identification of the resonant dynamical system describing the motor assembly.

The control system 5 may comprise a storage medium 13. The storage medium 13 may comprise a computer program including computer code which when executed by the processing circuitry 13 causes the control system 5 to perform a method as disclosed herein.

The storage medium 13 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

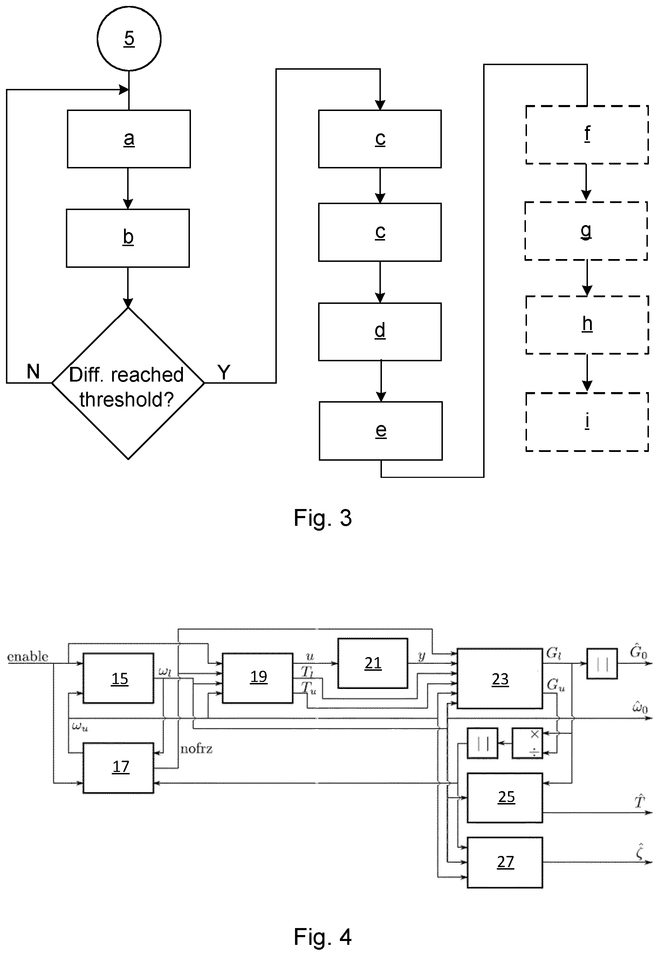

With reference to Figs 3-5, a method of identifying one or more parameters of a resonant dynamical system describing the motor assembly will now be described.

The resonant dynamical system may for example be expressed in the form of a bandpass filter with gain $G_0$ and time delay $e^{-sT}$ as shown in equation (1) below,

$$G(s) = G_0 \frac{2\zeta\omega_0 s}{s^2 + 2\zeta\omega_0 s + \omega_0^2} e^{-sT}, (1)$$

where $\zeta$ is the damping of the resonant dynamical system, and $\omega_0$ is the resonance frequency of the resonant dynamical system. The bandpass filter part accounts for the resonant dynamics and the time delay $e^{-sT}$ accounts for actuation and/or measurement lag. The resonant dynamical system (1) is valid in a neighbourhood of the resonance frequency $\omega_0$. Outside this neighbourhood, accuracy of the lag model is of less importance, since the gain there is low.

The input signal u to the resonant dynamical system, and thus to the electric motor 3, is determined by the control system 5. The input signal u is an oscillating incremental torque reference, which the power converter 6 uses to generate an oscillating incremental torque.

The method involves simultaneously injecting two frequency components, i.e., a first frequency $\omega_l$ and a second frequency $\omega_u$, into the electric motor 3 in a step a).

The first frequency $\omega_l$ is injected below the expected resonance frequency of the resonant dynamical system, and the second frequency $\omega_u$ is injected above the expected resonance frequency.

The method may however according to one example initially start with both the first frequency $\omega_l$ and the second frequency $\omega_u$ below the expected resonance frequency before the second frequency $\omega_u$ jumps over the expected resonance frequency to reach step a).

If the estimated resonance frequency $\omega_0$ is set to $\sqrt{\omega_l \omega_u}$, and $G_l = G(j\omega_l)$, i.e., a first gain of the resonant dynamical system at the first frequency, and $G_u = G(j\omega_u)$ i.e., a second gain of the resonant dynamical system at the second frequency, then the gain ratio between the first gain $G_l$ and the second gain $G_u$ is

$$\left| \frac{G_l}{G_u} \right| = 1, (2)$$

This follows from equation (1). Hereto, invariant of the damping $\zeta$ and T in the time delay, the first frequency $\omega_l$ and the second frequency $\omega_u$ form the geometric average of the resonance frequency $\omega_0$ of the resonant dynamical system. An estimate of the resonance frequency $\omega_0$ can thus be obtained immediately as the geometric average once the first gain $G_l$ and the second gain $G_u$ have been determined as soon as the gain ratio is 1 or has converged to be within a predetermined acceptable range, for example having a lower boundary of at least 0.99 and an upper boundary of at most 1.01. Alternatively, because of the presence of noise, it may be better to instead of determining the proximity of the gain ratio to 1, let the gain ratio converge towards 1 for a predetermined amount of time from the start of the first iteration of step a) has passed to determine the resonance frequency $\omega_0$.

Step a) may involve injecting the first frequency $\omega_l$ and the second frequency $\omega_u$ as follows. Based on the first frequency $\omega_l$ and the second frequency $\omega_u$, two rotating complex vectors may be formed as $T_l = A_{tr}e^{j\theta l}$, where $\theta_l = \int \omega_l dt$ and $T_u = A_{tr}e^{j\theta u}$, where $\theta_u = \int \omega_u dt$. The oscillating incremental torque reference u is set as the real part of the sum of these two vectors,

$$u = enable \cdot Re\{T_l + nofrz \cdot T_u\}$$

where enable is a flag that is changed from 0 to 1 when the method starts, and nofrz is a flag that is 1 until step d), when it is set to 0. Step d) will be described in more detail in the following.

As shown in Fig. 4, the control system 5 comprises a plurality of functional blocks, such as an $\omega_l$ controller 15 which is configured to generate the first frequency $\omega_l$, an $\omega_u$ controller 17 which is configured to generate the second frequency $\omega_u$, a signal injector 19 which injects the oscillating incremental torque reference to the resonant dynamical system represented by block 21, a component extractor 23 arranged to determine the first gain $G_l$ and the second gain $G_u$, a delay estimator 25, and a damping estimator 27.

In a step b) the first frequency $\omega_l$ is increased and the second frequency $\omega_u$ is decreased. One of the first frequency $\omega_l$ and the second frequency $\omega_u$ is set before the other one of the first frequency $\omega_l$ and the second frequency $\omega_u$. The frequency, which is set first, is based on a difference between 1 and the gain ratio of equation (2).

Step b) is performed by the $\omega_l$ controller 15 and the $\omega_u$ controller 17. According to the present example, the $\omega_u$ controller 17 takes the lead when setting the second frequency $\omega_u$, and then the $\omega_l$ controller 15 follows with setting the first frequency $\omega_l$. It could alternatively be the other way around. Thus, according to the present example, the purpose of the $\omega_u$ controller 17 is to adjust the second frequency $\omega_u$ such that equation (1) holds. The second frequency $\omega_u$ can for example be obtained by

$$\omega_u = enable \cdot nofrz \cdot \alpha_u(\omega_u - \omega_l) \int e_g dt$$

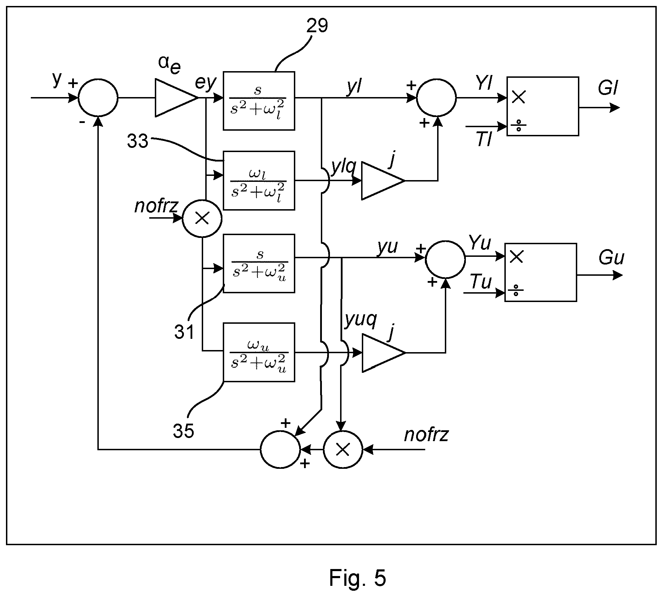

where $e_g = 1 - \left|\dfrac{G_l}{G_u}\right|$ and $\alpha_u$ is a constant that can be selected to at least one order smaller than $\alpha_e$ shown in Fig. 5. The $\omega_u$ controller 17 is enabled when enable=1 and frozen when nofrz=0. The gain component before the integral is set proportional to the difference $\omega_u - \omega_l$ between the second frequency $\omega_u$ and the first frequency $\omega_l$ in order to have a higher gain initially, when the difference is large.

Steps a)-b) are performed until a difference between the second frequency $\omega_u$ and the first frequency $\omega_l$ is equal to or smaller than a threshold value $\Delta\omega$, i.e., $\omega_u$-

$\omega_l = \Delta\omega$. This leads to step c) in which the one of the first frequency $\omega_l$ and the second frequency $\omega_u$ that in step b) is set after the other frequency is frozen, to obtain a first frozen frequency value. In the present example, the first frequency $\omega_l$ is thus frozen, resulting in the first frozen frequency value at the frozen frequency.

The threshold value $\Delta\omega$ is according to one example not smaller than 20 rad/s. This prevents the first frequency $\omega_l$ and the second frequency $\omega_u$ from being inseparable by the component extractor 23.

In a step d) the one of the first frequency $\omega_l$ and the second frequency $\omega_u$ which is not frozen in step c) is adjusted to move closer to the first frozen frequency value. Step d) is repeated until the gain ratio in equation (1) is within the predetermined acceptable range, or until a predetermined amount of time from the start of the first iteration of step a) has passed. Further the adjusted first frequency or second frequency in the last iteration in step d) is set to a second frozen frequency value. In the present example the adjusting, repeating, and setting in step d) is for the second frequency $\omega_u$.

The flag nofrz is changed from 1 to 0 when the $\omega_u$ controller 17 has converged, i.e., when the gain ratio in equation (1) is within the predetermined acceptable range or the predetermined amount of time from the start of the first iteration of step a) has passed, at which time it is expected that the $\omega_u$ controller 17 has converged.

The $\omega_l$ controller 15 is configured to adjust the first frequency $\omega_l$ so that it tends towards the second frequency $\omega_u$, which according to the present example is set first. The $\omega_l$ controller 15 is frozen when the control error $e_\omega = \omega_u - \omega_l < \Delta\omega$, resulting in the first frozen frequency value. The freezing can for example be implemented by applying a dead-zone (DZ) [$-\Delta\omega$, $\Delta\omega$] to the control error $e_\omega$, giving

$$\omega_i = enable \cdot \alpha_l \int DZ(e_\omega, \Delta\omega)dt$$

where $\omega_i$ is the state of the $\omega_l$ controller 15. The constant $\alpha_l$ may be chosen to be equal to $\alpha_u$. The output from the $\omega_l$ controller 15 is formed by

$$\omega_l = \begin{cases} \omega_i, & nofrz = 1 \\ \sqrt{\omega_l\omega_u}, & nofrz = 0 \end{cases}$$

Thus, when the flag nofrz drops to zero, the first frequency $\omega_l$ is set as the geometric average of the outputs of the $\omega_l$ controller 15 and the $\omega_u$ controller 17, which are both frozen at this stage.

Hereto, in a step e) the resonance frequency $\widehat{\omega_0}$ of the resonant dynamical system 21 is estimated based on the first frozen frequency value and the second frozen frequency value.

When the estimated resonance frequency $\widehat{\omega_0}$

has been obtained in step e), the method may comprise a step f) in which the power converter 6 injects the oscillating incremental torque reference u, based on the estimated resonance frequency. The electric motor 3 is thus stimulated by the resonance frequency. Further, a step g) may involve determining a gain of the resonant dynamical system 21 at the resonance frequency. This is done by the component extractor 23, an example of which is shown in more detail in Fig. 5.

The exemplified component extractor 23 includes two resonant controllers 29, 31, tuned to a respective one of the first frequency $\omega_l$ and the second frequency $\omega_u$. The sum of the outputs of the resonant controllers 29 and 31 $y_l + nofrz \cdot y_u$ is subtracted from the vibration-related signal y measured by the sensors 7 and output by the resonant dynamical system 21, i.e., the motor assembly. The effect of this closed-loop system is that the resonant controllers 29 and 31 outputs $y_l$ and $y_u$, respectively, will extract the first frequency $\omega_l$ and the second frequency $\omega_u$ in the vibration-related signal y. Thus, the transfer function $H_l(s)$ from y to $y_l$ has the property that $H_l(j\omega_l) = 1$ and $H_l(j\omega_u) = 0$. The transfer function $H_u(s)$ from y to $y_u$ has the opposite properties.

In addition, the component extractor 23 has two resonators 33 and 35 which are not placed in the closed loop. Since these resonators 33, 35 have $\omega_{l,u}$ in their numerators in the place of s, they create the quadrature components to the outputs $y_{l,u}$, i.e., sinusoids that lag the outputs $y_{l,u}$ by 90°. If $y_{l,u} = A_{l,u} \cos(\omega_{l,u}t + \phi_{l,u})$, then $y_{l,uq} = A_{l,u} \sin(\omega_{l,u}t + \phi_{l,u})$, giving $Y_{l,u} = y_{l,u} + jy_{l,uq} = A_{l,u}e^{j(\omega_{l,u}t + \phi_{l,u})}$. Thus, the complex vector which is the response to $T_{l,u}$ is reconstructed.

The multiplication by nofrz in the input to the resonant controller 31 and the resonator 35, as well as in the feedback of the output $y_u$, freezes $Y_u$ to a static complex sinusoid when nofrz=o. It has been found empirically that a suitable selection of the constant $\alpha_e$ is in the range of 10% of the resonance frequency $\omega_0$ but not larger than 30 rad/s.

With $Y_l$ and $Y_u$ as the outputs of the component extractor 23, division respectively by $T_l$ and $T_u$ is made to cancel the oscillations at respectively the first frequency $\omega_l$ and the second frequency $\omega_l$, leaving the corresponding resonant dynamical system frequency responses, i.e., the first gain $G_l$ and the second gain $G_u$

$$G_l = G(j\omega_l) = \frac{Y_l}{T_l}, G_u = G((j\omega_u) = \frac{Y_u}{T_u}$$

The first gain $G_l$ and the second gain $G_u$ are used to e.g., determine the gain ratio in equation (2). The estimated gain $\widehat{G_0}$ of the resonant dynamical system is the modulus of the first gain $G_l$ because after a transient, the first gain $G_l$ converges to a constant value, whose modulus is the estimated gain $\widehat{G_0}$.

According to one example, the method may comprise a step h) of determining the time delay T of the resonant dynamical system 21 based on an argument of the resonant dynamical system at the resonance frequency $\omega_0$, i.e., arg ($G_l$). Here, one may set

$$\phi_l = \begin{cases} argG_l, & if \ argG_l \leq 0 \\ argG_l - 2\pi, & if \ argG_l > 0 \end{cases}$$

wherein the estimated T, $\widehat{T} = -\frac{\phi_l}{\omega_l}$.

According to one example, the method may comprise a step i) of determining the damping $\zeta$ of the resonant dynamical system based on the gain ratio, the first frozen frequency value, and the second frozen frequency value. The gain ratio is here determined by the first gain ($G_l$) at the estimated resonance frequency $\widehat{(\omega_0)}$, and the second gain ($G_u$) at the second frozen frequency value. Hereto, once nofrz=o, the estimate $\hat{\zeta}$ of the damping $\zeta$ may be obtained by letting $\omega_0 \to \omega_l$, $|G(j\omega_0)| \to |G_l|$, and $|G(j\omega_u)| \to |G_u|$, giving the estimate $\hat{\zeta}$

$$\widehat{\zeta} = \frac{\omega_u^2 - \omega_l^2}{2\omega_u\omega_l \sqrt{\left|\frac{G_l}{G_u}\right|^2 - 1}}$$

## Claims

1. Method of identifying one or more parameters of a resonant dynamical system describing a physical system, the method comprising:

    a) simultaneously stimulating the physical system by means of a first frequency ($\omega_l$) below an expected resonance frequency ($\omega_0$) of the resonant dynamical system and a second frequency ($\omega_u$) above the expected resonance frequency ($\omega_0$),
    b) increasing the first frequency ($\omega_l$) and decreasing the second frequency ($\omega_u$), wherein one of the first frequency ($\omega_l$) and the second frequency ($\omega_u$) is set before the other one of the first frequency ($\omega_l$) and the second frequency ($\omega_u$) and is based on a difference between 1 and a gain ratio of a first gain ($G_l$) of the resonant dynamical system at the first frequency ($\omega_l$), and a second gain ($G_u$) of the resonant dynamical system at the second frequency ($\omega_u$), and performing steps a)-b) until a difference between the second frequency ($\omega_u$) and the first frequency ($\omega_l$) is equal to a threshold value,
    c) freezing the one of the first frequency ($\omega_l$) and the second frequency ($\omega_u$) that in step b) is set after the other frequency when the difference has reached the threshold value, to obtain a first frozen frequency value,

d) adjusting the one of the first frequency ($\omega_l$) and the second frequency ($\omega_u$) which is not frozen in step c) to move closer to the first frozen frequency value, and repeating step d) until the gain ratio is within a predetermined acceptable range, or until a predetermined amount of time from the start of the first iteration of step a) has passed, and setting the adjusted first frequency ($\omega_l$) or the second frequency ($\omega_u$) in the last iteration in step d) to a second frozen frequency value, and

e) estimating a resonance frequency ( $\widehat{\omega_0}$ ) of the resonant dynamical system based on the first frozen frequency value and the second frozen frequency value.

2. Method as claimed in claim 1, wherein step e) involves taking the square root of the product of the first frozen frequency value and the second frozen frequency value to obtain the estimated resonance frequency ( $\widehat{\omega_0}$ ).

3. Method as claimed in claim 1 or 2, comprising f) stimulating the physical system by means of the resonance frequency ($\omega_0$), and g) determining a gain $\widehat{(G_0)}$ of the resonant dynamical system at the estimated resonance frequency ( $\widehat{\omega_0}$ ).

4. Method as claimed in claim 3, comprising h) determining a time delay ($\hat{T}$) of the resonant dynamical system based on an argument of the resonant dynamical system at the estimated resonance frequency $\widehat{(\omega_0)}$ .

5. Method as claimed in claim 3 or 4, comprising i) determining a damping $\widehat{(\zeta)}$ of the resonant dynamical system based on the gain ratio, the first frozen frequency value, and the second frozen frequency value, wherein the gain ratio when determining the damping $\widehat{(\zeta)}$ is determined by the first gain ($G_l$) at the estimated resonance frequency $\widehat{(\omega_0)}$ , and the second gain ($G_u$) at the second frozen frequency value.

6. Method as claimed in any of the preceding claims, wherein the predetermined acceptable range has a lower boundary of at least 0.99 and an upper boundary of at most 1.01.

7. Method as claimed in any of the preceding claims, wherein the threshold value is at least one order smaller than the resonance frequency.

8. Method as claimed in any of the preceding claims, comprising determining the first gain ($G_l$) and the second gain ($G_u$) based on vibration-related measurements of the physical system when stimulated by the first frequency ($\omega_l$) and the second frequency ($\omega_u$).

9. Method as claimed in any of the preceding claims, wherein the physical system is an electrical machine.

10. Method as claimed in claim 9, wherein the stimulating involves injecting oscillating incremental torque into the electrical machine.

11. Method as claimed in any of the preceding claims, wherein prior to step a) the method comprises simultaneously stimulating the physical system by means of the first frequency ($\omega_l$) and the second frequency ($\omega_u$) below the expected resonance frequency, and adjusting the second frequency ($\omega_u$) until the second frequency ($\omega_u$) is above the expected resonance frequency.

12. A control system (5) for identifying parameters of a resonant dynamical system describing a physical system, the control system (5) comprising:

processing circuitry (11), and
a storage medium (13) comprising computer code which when executed by the processing circuitry (11) is configured to cause the control system (5) to perform the method as claimed in any of the preceding claims.

13. System comprising:

a physical system,
a control system (5) as claimed in claim 12, and
an actuator configured to stimulate the physical system, wherein the control system (5) is configured to control the actuator.

14. System as claimed in claim 13, wherein the physical system is an electrical machine, and the actuator is a power converter (6).

**Patentansprüche**

1. Verfahren zum Identifizieren eines oder mehrerer Parameter eines resonanten dynamischen Systems, das ein physisches System beschreibt, wobei das Verfahren umfasst:

a) gleichzeitiges Stimulieren des physischen Systems mittels einer ersten Frequenz ($\omega_l$) unter

einer erwarteten Resonanzfrequenz ($\omega_0$) des resonanten dynamischen Systems und einer zweiten Frequenz ($\omega_u$) über der erwarteten Resonanzfrequenz ($\omega_0$),

b) Erhöhen der ersten Frequenz ($\omega_l$) und Verringern der zweiten Frequenz ($\omega_u$), wobei eine der ersten Frequenz ($\omega_l$) und der zweiten Frequenz ($\omega_u$) vor der anderen der ersten Frequenz ($\omega_l$) und der zweiten Frequenz ($\omega_u$) eingestellt wird und auf einer Differenz zwischen 1 und einem Verstärkungsverhältnis einer ersten Verstärkung ($G_l$) des resonanten dynamischen Systems bei der ersten Frequenz ($\omega_l$) und einer zweiten Verstärkung ($G_u$) des resonanten dynamischen Systems bei der zweiten Frequenz ($\omega_u$) basiert, und Durchführen der Schritte a)-b), bis eine Differenz zwischen der zweiten Frequenz ($\omega_u$) und der ersten Frequenz ($\omega_l$) gleich einem Schwellenwert ist,

c) Einfrieren der einen der ersten Frequenz ($\omega_l$) und der zweiten Frequenz ($\omega_u$), die in Schritt b) nach der anderen Frequenz eingestellt wird, wenn die Differenz den Schwellenwert erreicht hat, um einen ersten eingefrorenen Frequenzwert zu erhalten,

d) Anpassen der einen der ersten Frequenz ($\omega_l$) und der zweiten Frequenz ($\omega_u$), die in Schritt c) nicht eingefroren wird, um sich näher an den ersten eingefrorenen Frequenzwert zu bewegen, und Wiederholen von Schritt d), bis das Verstärkungsverhältnis innerhalb eines vorbestimmten akzeptablen Bereichs liegt oder bis eine vorbestimmte Menge an Zeit ab dem Beginn der ersten Iteration von Schritt a) verstrichen ist, und Einstellen der angepassten ersten Frequenz ($\omega_l$) oder der zweiten Frequenz ($\omega_u$) in der letzten Iteration in Schritt d) auf einen zweiten eingefrorenen Frequenzwert, und

e) Schätzen einer Resonanzfrequenz $\widehat{(\omega_0)}$ des resonanten dynamischen Systems basierend auf dem ersten eingefrorenen Frequenzwert und dem zweiten eingefrorenen Frequenzwert.

2. Verfahren nach Anspruch 1, wobei Schritt e) das Ziehen der Quadratwurzel des Produkts aus dem ersten eingefrorenen Frequenzwert und dem zweiten eingefrorenen Frequenzwert beinhaltet, um die geschätzte Resonanzfrequenz $\widehat{(\omega_0)}$ zu erhalten.

3. Verfahren nach Anspruch 1 oder 2, umfassend f) Stimulieren des physischen Systems mittels der Resonanzfrequenz ($\omega_0$) und g) Bestimmen einer Verstärkung $\widehat{(G_0)}$ des resonanten dynamischen Systems bei der geschätzten Resonanzfrequenz $\widehat{(\omega_0)}$.

4. Verfahren nach Anspruch 3, umfassend h) Bestimmen einer Zeitverzögerung ($\hat{T}$) des resonanten dynamischen Systems basierend auf einem Argument des resonanten dynamischen Systems bei der geschätzten Resonanzfrequenz $\widehat{(\omega_0)}$.

5. Verfahren nach Anspruch 3 oder 4, umfassend i) Bestimmen einer Dämpfung $\widehat{(\zeta)}$ des resonanten dynamischen Systems basierend auf dem Verstärkungsverhältnis, dem ersten eingefrorenen Frequenzwert und dem zweiten eingefrorenen Frequenzwert, wobei das Verstärkungsverhältnis beim Bestimmen der Dämpfung $\widehat{(\zeta)}$ durch die erste Verstärkung ($G_l$) bei der geschätzten Resonanzfrequenz $\widehat{(\omega_0)}$ und die zweite Verstärkung ($G_u$) bei dem zweiten eingefrorenen Frequenzwert bestimmt wird.

6. Verfahren nach einem der vorhergehenden Ansprüche, wobei der vorbestimmte akzeptable Bereich eine untere Grenze von mindestens 0,99 und eine obere Grenze von höchstens 1,01 aufweist.

7. Verfahren nach einem der vorhergehenden Ansprüche, wobei der Schwellenwert mindestens eine Größenordnung kleiner als die Resonanzfrequenz ist.

8. Verfahren nach einem der vorhergehenden Ansprüche, umfassend Bestimmen der ersten Verstärkung ($G_l$) und der zweiten Verstärkung ($G_u$) basierend auf schwingungsbezogenen Messungen des physischen Systems, wenn es durch die erste Frequenz ($\omega_l$) und die zweite Frequenz ($\omega_u$) stimuliert wird.

9. Verfahren nach einem der vorhergehenden Ansprüche, wobei das physische System eine elektrische Maschine ist.

10. Verfahren nach Anspruch 9, wobei das Stimulieren das Einspritzen eines oszillierenden inkrementellen Drehmoments in die elektrische Maschine beinhaltet.

11. Verfahren nach einem der vorhergehenden Ansprüche, wobei das Verfahren vor Schritt a) gleichzeitiges Stimulieren des physischen Systems mittels der ersten Frequenz ($\omega_l$) und der zweiten Frequenz ($\omega_u$) unter der erwarteten Resonanzfrequenz und Anpassen der zweiten Frequenz ($\omega_u$), bis die zweite Frequenz ($\omega_u$) über der erwarteten Resonanzfrequenz liegt, umfasst.

**12.** Steuersystem (5) zum Identifizieren von Parametern eines resonanten dynamischen Systems, das ein physisches System beschreibt, wobei das Steuersystem (5) umfasst:

eine Verarbeitungsschaltungsanordnung (11), und

ein Speichermedium (13), das Computercode umfasst, der, wenn er durch die Verarbeitungsschaltungsanordnung (11) ausgeführt wird, konfiguriert ist, zu verursachen, dass das Steuersystem (5) das Verfahren nach einem der vorhergehenden Ansprüche durchführt.

**13.** System, umfassend:

ein physisches System,
ein Steuersystem (5) nach Anspruch 12, und
einen Aktuator, der dazu ausgelegt ist, das physische System zu stimulieren, wobei das Steuersystem (5) dazu ausgelegt ist, den Aktuator zu steuern.

**14.** System nach Anspruch 13, wobei das physische System eine elektrische Maschine ist und der Aktuator ein Leistungswandler (6) ist.

**Revendications**

**1.** Procédé d'identification d'un ou plusieurs paramètres d'un système dynamique résonant décrivant un système physique, le procédé comprenant :

a) la stimulation simultanée du système physique par une première fréquence ($\omega_l$) inférieure à une fréquence de résonance attendue ($\omega_0$) du système dynamique résonant et une deuxième fréquence ($\omega_u$) supérieure à la fréquence de résonance attendue ($\omega_0$),
b) l'augmentation de la première fréquence ($\omega_l$) et diminution de la deuxième fréquence ($\omega_u$), où l'une de la première fréquence ($\omega_l$) et de la deuxième fréquence ($\omega_u$) est fixée avant l'autre parmi la première fréquence ($\omega_l$) et la deuxième fréquence ($\omega_u$) et est basée sur un écart entre 1 et un rapport de gain d'un premier gain ($G_l$) du système dynamique résonant à la première fréquence ($\omega_l$), et un deuxième gain ($G_u$) du système dynamique résonant à la deuxième fréquence ($\omega_u$), et l'exécution des étapes a)-b) jusqu'à ce qu'une différence entre la deuxième fréquence ($\omega_u$) et la première fréquence ($\omega_l$) soit égale à une valeur seuil,
c) le gel de celle de la première fréquence ($\omega_l$) et de la deuxième fréquence ($\omega_u$) qui à l'étape b) est fixée après l'autre fréquence lorsque la différence a atteint la valeur seuil, pour obtenir une première valeur de fréquence gelée,
d) l'ajustement de celle de la première fréquence ($\omega_l$) et de la deuxième fréquence ($\omega_u$) qui n'a pas été gelée à l'étape c) pour se rapprocher de la première valeur de fréquence gelée, et la répétition de l'étape d) jusqu'à ce que le rapport de gain soit dans une plage acceptable prédéterminée, ou jusqu'au terme d'une durée prédéterminée depuis le début de la première itération de l'étape a), et la mise de la première fréquence ajustée ($\omega_l$) ou de la deuxième fréquence ($\omega_u$) lors de la dernière itération de l'étape d) à une deuxième valeur de fréquence gelée, et
e) l'estimation d'une fréquence de résonance $\widehat{(\omega_0)}$ du système dynamique résonant sur la base de la première valeur de fréquence gelée et de la deuxième valeur de fréquence gelée.

**2.** Procédé selon la revendication 1, dans lequel l'étape e) consiste à prendre la racine carrée du produit de la première valeur de fréquence gelée et de la deuxième valeur de fréquence gelée pour obtenir la fréquence de résonance estimée $\widehat{(\omega_0)}$.

**3.** Procédé selon la revendication 1 ou 2, comprenant f) la stimulation du système physique au moyen de la fréquence de résonance ($\omega_0$), et g) la détermination d'un gain $\widehat{(G_0)}$ du système dynamique de résonance à la fréquence de résonance estimée $\widehat{(\omega_0)}$.

**4.** Procédé selon la revendication 3, comprenant h) la détermination d'un retard temporel ($\hat{T}$) du système dynamique résonant sur la base d'un argument du système dynamique résonant à la fréquence de résonance estimée $\widehat{(\omega_0)}$.

**5.** Procédé selon la revendication 3 ou 4, comprenant i) la détermination d'un amortissement $\widehat{(\zeta)}$ du système dynamique résonant sur la base du rapport de gain, de la première valeur de fréquence figée et de la deuxième valeur de fréquence figée, dans lequel le rapport de gain lors de la détermination de l'amortissement $\widehat{(\zeta)}$ est déterminé par le premier gain ($G_l$) à la fréquence de résonance estimée $\widehat{(\omega_0)}$, et le deuxième gain ($G_u$) à la deuxième valeur de fréquence figée.

**6.** Procédé selon l'une quelconque des revendications précédentes, dans lequel la plage acceptable prédéterminée a une limite inférieure d'au moins 0,99 et une limite supérieure d'au plus 1,01.

**7.** Procédé selon l'une quelconque des revendications précédentes, dans lequel la valeur de seuil est d'au moins un ordre inférieur à la fréquence de résonance.

**8.** Procédé selon l'une quelconque des revendications précédentes, comprenant la détermination du premier gain ($G_l$) et du deuxième gain ($G_u$) sur la base de mesures liées à la vibration du système physique lorsqu'il est stimulé par la première fréquence ($\omega_l$) et la deuxième fréquence ($\omega_u$).

**9.** Procédé selon l'une quelconque des revendications précédentes, dans lequel le système physique est une machine électrique.

**10.** Procédé selon la revendication 9, dans lequel la stimulation consiste à injecter un couple incrémental oscillant dans la machine électrique.

**11.** Procédé selon l'une quelconque des revendications précédentes, dans lequel, avant l'étape a), le procédé comprend la stimulation simultanée du système physique par la première fréquence ($\omega_l$) et la deuxième fréquence ($\omega_u$) inférieure à la fréquence de résonance attendue, et l'ajustement de la deuxième fréquence ($\omega_u$) jusqu'à ce que la deuxième fréquence ($\omega_u$) soit supérieure à la fréquence de résonance attendue.

**12.** Système de commande (5) pour identifier des paramètres d'un système dynamique résonant décrivant un système physique, le système de commande (5) comprenant :

des circuits de traitement (11), et
un support de stockage (13) comprenant un code informatique qui, lorsqu'il est exécuté par les circuits de traitement (11), est configuré pour amener le système de commande (5) à exécuter le procédé selon l'une quelconque des revendications précédentes.

**13.** Système comprenant :

un système physique,
un système de commande (5) selon la revendication 12, et
un actionneur conçu pour stimuler le système physique, le système de commande (5) étant conçu pour commander l'actionneur.

**14.** Système selon la revendication 13, dans lequel le système physique est une machine électrique, et l'actionneur est un convertisseur de puissance (6).

Fig. 1

5

Fig. 2

Fig. 3

Fig. 4

EP 4 485 793 B1

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2510891 A1